(19) Europäisches Patentamt
European Patent Office
Office européen des brevets

(11) **EP 3 946 831 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **20717775.9**

(22) Anmeldetag: **19.03.2020**

(51) Internationale Patentklassifikation (IPC):
**B25J 9/16** *(2006.01)*

(52) Gemeinsame Patentklassifikation (CPC):
**B25J 9/1676**

(86) Internationale Anmeldenummer:
**PCT/EP2020/057573**

(87) Internationale Veröffentlichungsnummer:
**WO 2020/200805 (08.10.2020 Gazette 2020/41)**

(54) **VORGEBEN VON SICHEREN GESCHWINDIGKEITEN FÜR EINEN ROBOTERMANIPULATOR**

SPECIFYING SAFE SPEEDS FOR A ROBOT MANIPULATOR

SPÉCIFICATION DE VITESSES DE SÉCURITÉ POUR UN MANIPULATEUR DE ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2019   DE 102019108390**

(43) Veröffentlichungstag der Anmeldung:
**09.02.2022   Patentblatt 2022/06**

(73) Patentinhaber: **Franka Emika GmbH**
**80797 München (DE)**

(72) Erfinder: **SPENNINGER, Andreas**
**85757 Karlsfeld (DE)**

(74) Vertreter: **Novagraaf Group**
**Chemin de l'Echo 3**
**1213 Onex / Geneva (CH)**

(56) Entgegenhaltungen:
**EP-A2- 2 977 149        DE-B3-102015 106 227**
**JP-A- 2018 103 343**

- **"Mitsubishi Industrial Robot Series RH-3SDHR series Standard Specifications Manual", , 1. Januar 2012 (2012-01-01), Seiten 1-266, XP055260432, mitsubishielectric.com Gefunden im Internet: URL:https://za3a.mitsubishielectric.com/fa /en/mymitsubishi/download_manager?id=6347 [gefunden am 2016-03-22]**

## Beschreibung

Die Erfindung betrifft ein Verfahren zum Vorgeben einer sicheren Geschwindigkeit eines Robotermanipulators, sowie einen Robotermanipulator mit einer Steuereinheit, die insbesondere zum Vorgeben einer sicheren Geschwindigkeit für den Robotermanipulator ausgeführt ist.

Verfahren zur Bestimmung von sicheren Geschwindigkeiten für Robotermanipulatoren sind aus EP 2 977 149 A2 und JP 2018 103343 A bekannt.

Aufgabe der Erfindung ist es, einen Robotermanipulator so zu betreiben, dass er bei einer unerwarteten Kollision mit einem Objekt aus der Umgebung des Robotermanipulators nur begrenzten Schaden nimmt.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Vorgeben einer bezüglich einer möglichen Kollision des Robotermanipulators sicheren Geschwindigkeit eines Robotermanipulators, aufweisend die Schritte:

- Bereitstellen einer Datenbank, wobei die Datenbank für eine Vielzahl von ausgewählten Oberflächenpunkten am Robotermanipulator einen jeweiligen Datensatz aufweist, wobei der jeweilige Datensatz für eine Vielzahl möglicher Steifigkeiten und/oder Massen eines Objekts aus der Umgebung des Robotermanipulators eine jeweilige sichere Normalgeschwindigkeit des jeweiligen der Oberflächenpunkte angibt, wobei die Normalgeschwindigkeit die zur lokalen Oberfläche des Robotermanipulators an einem jeweiligen der Oberflächenpunkte senkrecht stehende Komponente des Geschwindigkeitsvektors des jeweiligen der Oberflächenpunkte ist,
- Erfassen einer tatsächlichen Steifigkeit und/oder einer tatsächlichen Masse des Objekts aus der Umgebung des Robotermanipulators durch Vorwissen oder durch sensorisches Erfassen oder unter Annahme von unendlicher Steifigkeit und/oder unendlicher Masse ,
- Zuordnen der erfassten tatsächlichen Steifigkeit und/oder der tatsächlichen Masse zu einer sicheren Normalgeschwindigkeit eines jeweiligen Datensatzes für den jeweiligen der Oberflächenpunkte, und
- Vorgeben einer Geschwindigkeit für einen jeweiligen der Oberflächenpunkte auf einer aktuellen oder geplanten Bahn des Robotermanipulators, sodass die am jeweiligen der Oberflächenpunkte auftretende Normalgeschwindigkeit kleiner oder gleich der zugeordneten sicheren Normalgeschwindigkeit ist.

Unter dem Robotermanipulator wird insbesondere ein Manipulator bestehend aus einer Vielzahl von durch Gelenke miteinander verbundenen Gliedern verstanden. Insbesondere gehört ebenfalls ein Endeffektor zum Robotermanipulator. Nicht notwendigerweise müssen, weiterhin bevorzugt, die Glieder des Robotermanipulators in einer zusammenhängenden kinematischen Kette angeordnet sein - das erfindungsgemäße Verfahren kann auch in einem Zweiarmsystem und in einem humanoiden Robotersystem angewendet werden.

Die jeweiligen Oberflächenpunkte des Robotermanipulators werden dabei insbesondere im Vorhinein so ausgewählt, dass die Datenbankgröße nicht größer als notwendig wird, jedoch für mögliche Kollisionen des Robotermanipulators mit einem Objekt aus der Umgebung des Robotermanipulators eine ausreichend große Anzahl von Oberflächenpunkten auf der Oberfläche des Robotermanipulators berücksichtigt wird.

Die zur Oberfläche an einem jeweiligen der Oberflächenpunkte senkrecht stehende Komponente des Geschwindigkeitsvektors ist insbesondere senkrecht zur lokalen Oberfläche desjenigen Bauelements des Robotermanipulators, an dem der jeweilige der Oberflächenpunkte angeordnet ist. Die Oberflächenpunkte sind bevorzugt auf einer Oberfläche des Robotermanipulators gedacht angeordnet, sodass am jeweiligen Ort eines jeden der Oberflächenpunkte eine Tangentialebene auf den Robotermanipulator eindeutig definiert ist.

Ein Datensatz weist für jede aus einer Vielzahl möglicher Steifigkeiten und/oder Massen eine dafür zugeordnete sichere Normalgeschwindigkeit auf. Insbesondere ist die Vielzahl möglicher Steifigkeiten und/oder Massen durch ein äquidistantes Raster vorgegeben. So kann durch Erfassen der tatsächlich vorliegenden Steifigkeit und/oder der Masse des Objekts der Umgebung der Datensatz dafür verwendet werden, um durch einen Vergleich der tatsächlich vorliegenden Steifigkeit und/oder der tatsächlichen Masse des Objekts der Umgebung mit der Vielzahl möglicher Steifigkeiten und/oder Massen des jeweiligen Datensatzes den am ehesten passenden der Einträge zu finden, um zu einer sicheren Normalgeschwindigkeit, wie in dem Datensatz vorgegeben, zu gelangen. Indem eine Steifigkeit des Objekts berücksichtigt wird, wird bei einer Kollision der Weg berücksichtigt, den der Robotermanipulator beim Auftreffen auf das Objekt unter Widerstand des Objekts zurücklegen kann, bis seine Geschwindigkeit den kleinsten Wert erreicht hat. Ist das Objekt kein festes Objekt, wie es durch eine unendliche Masse angenähert werden kann, beispielsweise eine Mauer, ein Stahlgerüst, ein schweres Fahrzeug oder andere Objekte, deren Masse im Vergleich zu der Masse des Robotermanipulators deutlich höher ist, oder Objekte, die mit der Umgebung des Robotermanipulators fest verbunden sind, wie eine Stützsäule, die fest im Boden eingelassen ist, sondern ein kleines bewegliches Objekt, so resultierte durch die Kollision ein elastischer oder plastischer Stoß zweier Massen, wovon die erste Masse durch insbesondere eine reflektierte Masse des Roboters ausgebildet wird, und eine zweite Masse durch das Objekt ausgebildet wird, wobei die reflektierte Masse derjenige Massenanteil des Robotermanipulators ist, der tatsächlich einen Impuls durch seine Bewegung auf das Objekt bei der Kollision mit dem Objekt ausübt. Ein solcher elastischer oder plastischer Stoß wird den Robotermanipulator als Ganzes typischerweise nicht zum Stillstand bringen, sondern je nachdem, ob der Stoß eher plastisch oder elastisch erfolgt, unter Umständen auch nur zu einer geringen Geschwindigkeitsreduktion des Robotermanipulators, was die Belastung auf die Glieder des Robotermanipulators und auf die Gelenke des Robotermanipulators, insbesondere eines Getriebes an einem der Gelenke, deutlich mindert. Im Falle des elastischen oder plastischen Stoßes, wofür die Masse des Objektes berücksichtigt wird, ist also die Masse des Objekts und die Steifigkeit des Objekts zur genauen Erfassung einer Wirkung durch die Kollision zu berücksichtigen.

Bevorzugt wird die Robotermanipulator nur mit der sicheren Normalgeschwindigkeit oder mit einer Geschwindigkeit unterhalb der jeweiligen sicheren Normalgeschwindigkeit am jeweiligen der Oberflächenpunkte betrieben. Die sichere Normalgeschwindigkeit betrifft dabei eine Komponente des aktuellen Geschwindigkeitsvektors des jeweiligen der Oberflächenpunkte im dreidimensionalen Raum, die senkrecht zur jeweiligen Oberfläche, auf der sich der jeweilige der Oberflächenpunkte befindet, ist. Die Normalgeschwindigkeit ist dabei insbesondere auch senkrecht zu einer Tangentialgeschwindigkeit eines jeweiligen der Oberflächenpunkte, die jedoch hier nicht betrachtet wird.

Tritt eine unerwartete Kollision des Robotermanipulators mit einem Objekt aus der Umgebung des Robotermanipulators auf, so wird der Robotermanipulator in kurzer Zeit von seiner aktuellen Geschwindigkeit gebremst. Hierbei erfährt der Robotermanipulator eine gewisse (negative) Beschleunigung. In welcher Zeit der Robotermanipulator dabei abgebremst wird, das heißt welche Beschleunigung auf den Robotermanipulator wirkt, hängt insbesondere von der unmittelbar vor der Kollision vorherrschenden Geschwindigkeit ab, aber auch insbesondere auch von der Steifigkeit der ganzen Struktur des Robotermanipulators, insbesondere von dem Material an demjenigen Bauelement, das unmittelbar mit dem Objekt kollidiert, sowie einer Steifigkeit des Objekts selbst. Intuitiv ist klar, dass der Robotermanipulator bei einer Kollision mit einer Betonwand eine deutlich höhere Beschleunigung bei der Kollision erfährt, als bei einer Kollision mit weichem Holz oder Kunststoff.

Die Steifigkeit des Objekts aus der Umgebung des Robotermanipulators gibt insbesondere einen Widerstand gegen Verformung des Objekts an, wobei sich dieser Widerstand zum einen aus Materialkonstanten des Materials zusammensetzt, aus dem das Objekt besteht, sowie auch aus einer Form des Objekts; beispielsweise besteht eine metallische Spiralfeder üblicherweise aus einem Material mit hohem E-Modul und hoher Zugfestigkeit, kann aber durch die entsprechende Formgebung mit relativ geringer Kraft in Richtung der Achse der Spiralfeder verformt werden.

Bevorzugt ist die Steifigkeit des Objekts aus der Umgebung des Robotermanipulators durch Vorwissen bekannt. Das Erfassen einer tatsächlichen Steifigkeit und/oder einer tatsächlichen Masse des Objekts aus der Umgebung des Robotermanipulators durch Vorwissen erfolgt insbesondere durch eine Eingabe eines Anwenders. Da insbesondere durch betriebliche Unsicherheiten und in einer variablen Umgebung des Robotermanipulators dies nicht immer möglich ist, wird alternativ bevorzugt dazu die Umgebung des Roboters mit Sensoren erfasst, insbesondere Kameras, woraus insbesondere durch Zuordnen des erfassten Objekts aus der Umgebung des Robotermanipulators zu einem aus einer Vielzahl von abgespeicherten Objekten das jeweilige Objekt identifiziert wird. Liegt keine Information durch die oben genannten Möglichkeiten über die Steifigkeit des Objekts vor, so wird die Steifigkeit des Objekts bevorzugt als unendlich angenommen, was vorteilhaft eine konservative Schätzung als den extremen Wert annimmt, sodass für den Robotermanipulator immer eine sichere Geschwindigkeit gefunden wird, unabhängig von der tatsächlichen Steifigkeit des Objekts aus der Umgebung des Robotermanipulators. Eine unendlich hohe Steifigkeit bedeutet, dass das Objekt bei einer Kollision keinerlei Nachgiebigkeit aufweist und die Kollision daher ausschließlich durch die Elastizität im Robotermanipulator abgefedert wird. Eine unendliche hohe Masse bedeutet, dass anstatt einer Betrachtung von zwei Massen im elastischen oder plastischen Stoß, wonach beide Massen nach dem Stoß eine Geschwindigkeit aufweisen, die zweite der Massen, nämlich das Objekt, nach dem Stoß genauso wie vor dem Stoß keine Geschwindigkeit aufweist.

Bevorzugt werden die Datensätze der Datenbank experimentell ermittelt. Alternativ bevorzugt dazu wird die zulässige Geschwindigkeit für die Datenbank theoretisch ermittelt. Hierfür wird zunächst ein oberstes zulässiges Drehmoment $\tau_{max}$, welches auf ein Getriebe eines Gelenks wirken darf, bestimmt. Positionssensoren in allen Gelenken des Robotermanipulators erlauben eine vollständige Posen-Bestimmung des Robotermanipulators, da insoweit alle Gelenkswinkel bekannt sind. Dies wiederum erlaubt die Herleitung einer für diese Pose des Robotermanipulators gültige und in der Robotik gut bekannte Jacobi Matrix $J$. Mittels der Jacobi Matrix kann das vorbestimmte höchstzulässige Drehmoment für das Getriebe des Gelenks in eine externe Kraft $F_{max}$ umgerechnet werden, sodass mit der Pseudoinversen der Transponierten von $J$, bezeichnet als $(J^T)^{\#}$, gilt:

$$F_{max} = \left(J^T\right)^{\#} \tau_{max}$$

Die Anwendung des Energieerhaltungssatzes zur Gleichsetzung der kinetischen Energie mit Geschwindigkeit $v$ und Masse $m$ des Robotermanipulators zum Zeitpunkt unmittelbar vor der Kollision mit der Energieaufnahme der Kollision durch den Robotermanipulator und durch das Objekt selbst über einen Weg *s* mit der jeweiligen Steifigkeit *k* liefert:

$$E = 1/2 \cdot m \cdot v_{max}^2 = F_{max} \cdot s, \, k = F_{max}/s$$

Und somit:

$$F_{max} = v_{max} \cdot \overline{\sqrt{k/2 \cdot m}}$$

Somit ist durch das höchst zulässig vorgegebene Moment auf das Getriebe des Gelenks des Robotermanipulators eine Kraft an einem bestimmten der Oberflächenpunkte ermittelt, und durch diese Kraft auch eine von der Masse und der Steifigkeit des Robotermanipulators und des Objekts abhängige höchstzulässige Normalgeschwindigkeit ermittelt.

Es ist eine vorteilhafte Wirkung der Erfindung, dass der Robotermanipulator mit nur einer solchen Geschwindigkeit auf einem jeweiligen der Oberflächenpunkte angesteuert wird, dass eine unerwartete Kollision mit einem Objekt aus der Umgebung des Robotermanipulators zu keiner Beschädigung des Robotermanipulators führt. Die Beschädigung des Robotermanipulators betrifft dabei insbesondere eine Deformation eines der Glieder des Robotermanipulators sowie eine Überlastung des Getriebes, welches an einem zwei Glieder des Robotermanipulators verbindenden Gelenks angeordnet ist, welches bei Überlastung eine Welle-Nabe Verbindung zum Durchrutschen bringt oder auch das Überspringen von einem ersten Zahnrad über ein zweites Zahnrad nach sich zieht. Indem vorteilhaft die Normalgeschwindigkeit, also die Geschwindigkeitskomponente des ganzen Geschwindigkeitsvektorw des jeweiligen der Oberflächenpunkte, die zur Oberfläche am jeweiligen der Oberflächenpunkte senkrecht steht, betrachtet wird, wird vorteilhaft ein genaueres Ergebnis zur Schadensvorhersage erreicht, da tangentiale Kräfte auf die jeweiligen der Oberflächenpunkte erfahrungsgemäß nur geringen Einfluss ausüben und unwesentlich zu Schaden führen.

Gemäß einer vorteilhaften Ausführungsform gibt der jeweilige Datensatz weiterhin für eine Vielzahl möglicher Posen und Massenverteilungen des Robotermanipulators eine jeweilige sichere Normalgeschwindigkeit des jeweiligen der Oberflächenpunkte an, wobei das Verfahren weiterhin die Schritte aufweist:

- Erfassen einer aktuellen oder künftigen Pose und einer tatsächlichen Massenverteilung des Robotermanipulators,
- Zuordnen der aktuellen oder künftigen Pose und der tatsächlichen Massenverteilung des Robotermanipulators zu einer sicheren Normalgeschwindigkeit eines jeweiligen Datensatzes für den jeweiligen der Oberflächenpunkte.

Gemäß einer weiteren vorteilhaften Ausführungsform gibt der jeweilige Datensatz weiterhin für eine Vielzahl möglicher Steifigkeiten und/oder Flächenträgheitsmomente des jeweiligen Bauelements, an welchem der jeweilige der Oberflächenpunkte angeordnet ist, eine jeweilige sichere Normalgeschwindigkeit des jeweiligen der Oberflächenpunkte an, wobei das Verfahren weiterhin die Schritte aufweist:

- Erfassen einer tatsächlichen Steifigkeit und/oder eines tatsächlichen Flächenträgheitsmoments des jeweiligen Bauelements,
- Zuordnen der tatsächlichen Steifigkeit und/oder des tatsächlichen Flächenträgheitsmoments des jeweiligen Bauelements zu einer sicheren Normalgeschwindigkeit eines jeweiligen Datensatzes für den jeweiligen der Oberflächenpunkte.

Das Flächenträgheitsmoment des jeweiligen Bauelements gibt insbesondere dessen geometrisch bedingten Widerstand gegen Verformung an. Vorteilhaft werden durch diese Ausführungsform mehr Details des Robotermanipulators berücksichtigt, um noch genauer eine sichere Normalgeschwindigkeit, die möglichst hoch ist, vorzugeben.

Gemäß einer weiteren vorteilhaften Ausführungsform gibt der jeweilige Datensatz weiterhin für eine Vielzahl möglicher Verhältnisse der Oberflächenform der Oberfläche des jeweiligen Bauelements, an welchem der jeweilige der Oberflächenpunkte angeordnet ist, zu einer geometrischen Form des Objekts eine jeweilige sichere Normalgeschwindigkeit des jeweiligen der Oberflächenpunkte an, wobei das Verfahren weiterhin die Schritte aufweist:

- Erfassen des tatsächlichen Verhältnisses der Oberflächenform der Oberfläche des jeweiligen Bauelements, an welchem der jeweilige der Oberflächenpunkte angeordnet ist, zu einer geometrischen Form des Objekts,
- Zuordnen des erfassten tatsächlichen Verhältnisses zu einer sicheren Normalgeschwindigkeit eines jeweiligen Datensatzes für den jeweiligen der Oberflächenpunkte.

Das Verhältnis dieser geometrischen Formen ist mitbestimmend für den Kraftstoß auf den Robotermanipulator bei einer Kollision mit dem Objekt. Im Vergleich zum Aufeinandertreffen einer konvexen Form mit einer konkaven Form wird bei gleichbleibenden Steifigkeiten das Aufeinandertreffen zweier konvexer Formen einen anderen Kraftstoß hervorrufen. Vorteilhaft kann durch die Berücksichtigung dieser Verhältnisse der Kraftstoß bei einer Kollision genauer abgeschätzt werden, was zur einer besseren Vorgabe einer sicheren Normalgeschwindigkeit führt.

Gemäß einer weiteren vorteilhaften Ausführungsform werden die Oberflächenform der Oberfläche des jeweiligen Bauelements und die geometrische Form des Objekts jeweils in einer der folgenden Kategorien angegeben:

- konvex gewölbte Oberfläche mit Krümmungsradius r,
- konkav gewölbte Oberfläche mit Krümmungsradius r,
- keilförmig Oberfläche,
- Schärfegrad der Oberfläche.

Gemäß einer weiteren vorteilhaften Ausführungsform umfassen die Steifigkeit des Bauelements, an welchem der jeweilige der Oberflächenpunkte angeordnet ist, und die Steifigkeit am jeweiligen Ort der Oberflächenpunkte des Robotermanipulators jeweils zumindest eines der folgenden Elemente:

- E-Modul,
- Härtegrad,
- Streckgrenze,
- plastisches oder elastisches Verhalten,
- Duktilität.

Während der Härtegrad ein Maß für den Widerstand gegen Eindringen eines Körpers angibt, gibt der E-Modul einen Widerstand insbesondere bei einer Zugkraft des Materials an. Die Streckgrenze bezeichnet insbesondere diejenige Spannung, bis zu der ein Werkstoff bei einachsiger und momentenfreier Zugbeanspruchung keine dauerhafte plastische Verformung zeigt. Die Duktilität des Materials gibt insbesondere an, wie weit sich das Material plastisch verformt, bevor Versagen am Material auftritt. Vorteilhaft wird diese Größe mit berücksichtigt, um Schäden am jeweiligen Bauelement selbst insbesondere oberflächennah zu berücksichtigen.

Gemäß einer weiteren vorteilhaften Ausführungsform ist die in der Datenbank angegebene jeweilige sichere Normalgeschwindigkeit jeweils einem ersten Schadensmaß an einem jeweiligen Bauelement, an welchem der jeweilige der Oberflächenpunkte angeordnet ist, und/oder einem zweiten Schadensmaß an zumindest einem Gelenk des Robotermanipulators zugeordnet. Vorteilhaft werden durch diese Ausführungsform sowohl mögliche Schäden am jeweiligen Bauelement, insbesondere an einem Glied des Robotermanipulators, als auch mögliche Schäden an einem jeweiligen Gelenk des Robotermanipulators berücksichtigt. Insbesondere die Berücksichtigung möglicher Schäden an einem jeweiligen Gelenk ist insoweit vorteilhaft, als dass typischerweise an den Gelenken eines Robotermanipulators die Antriebe angeordnet sind, wobei die Antriebe typischerweise mit einem Getriebe verbunden sind. Ein solches Getriebe ist bei einer oben beschriebenen Kollision eine der häufigsten Ursachen von Beschädigungen am Robotermanipulator.

Gemäß einer weiteren vorteilhaften Ausführungsform umfasst das zweite Schadensmaß an dem zumindest einen Gelenk eine Belastung auf ein Getriebe, wobei das Getriebe mit einem Motor an dem jeweiligen Gelenk verbunden ist und zum Bewegen von zwei durch das jeweilige Gelenk verbundene Roboterglieder um das jeweilige Gelenk dient.

Gemäß einer weiteren vorteilhaften Ausführungsform umfasst die Belastung auf das Getriebe einen ersten Kennwert und/oder einen zweiten Kennwert oder eine Summe aus dem ersten Kennwert und dem zweiten Kennwert, wobei der erste Kennwert ein von der aktuellen Geschwindigkeit der Roboterglieder abhängiger und durch die Trägheit der Roboterglieder verursachter Impuls auf das Getriebe bei einer Kollision der Roboterglieder mit dem Objekt ist, und wobei der zweite Kennwert auf dem durch die Rotation eines elektrischen Motors an einem jeweiligen Gelenk, an dem das jeweilige Getriebe angeordnet ist, basierender Drehimpuls ist, der bei der Kollision auf das Getriebe übertragen wird. In dieser Ausführungsform werden vorteilhaft zwei für das Getriebe schädliche Belastungsmechanismen berücksichtigt. Zum einen entsteht im Allgemeinen ein belastendes Moment dadurch, insbesondere wenn der Endeffektor oder ein anderes Glied des Robotermanipulators mit dem Objekt kollidiert, wenn der Robotermanipulator selbst und daher auch die über den Robotermanipulator verteilten Massen noch einen gewissen Impuls aufweisen und durch ihre Trägheit dazu geneigt sind, sich weiter zu bewegen, wobei dieses Weiterbewegen durch die Kollision mit dem Objekt gestoppt wird. Zum anderen wird im Allgemeinen jeder Antrieb des Robotermanipulators zwischen zwei sich bewegenden Gliedern des Robotermanipulators einen Drehimpuls aufweisen, beispielsweise der Drehimpuls des Motors eines elektrischen Motors, der durch den plötzlichen Stopp bei einer Kollision mit dem Objekt direkt auf das Getriebe übertragen wird. Der Drehimpuls des Motors kann sich daher mit dem oben beschriebenen Moment, welches aus der Trägheit des Robotermanipulators herrührt, überlagern und so zu einem Überlastungsmoment des Getriebes führen. Vorteilhaft werden daher in dieser Ausführungsform nur einer der beiden Schadensformen oder auch die Summe der beiden Schadensformen berücksichtigt, um eine Überlastung des jeweiligen betrachteten Getriebes vorteilhaft zu verhindern.

Ein weiterer Aspekt der Erfindung betrifft einen Robotermanipulator mit einer Steuereinheit, wobei die Steuereinheit dazu ausgeführt ist:

- eine Datenbank bereitzustellen, wobei die Datenbank für eine Vielzahl von ausgewählten Oberflächenpunkten am Robotermanipulator einen jeweiligen Datensatz aufweist, wobei der jeweilige Datensatz für eine Vielzahl möglicher Steifigkeiten und/oder Massen eines Objekts aus der Umgebung des Robotermanipulators eine jeweilige bezüglich einer möglichen Kollision des Robotermanipulators sichere Normalgeschwindigkeit des jeweiligen der Oberflächenpunkte angibt, wobei die Normalgeschwindigkeit die zur Oberfläche an einem jeweiligen der Oberflächenpunkte senkrecht stehende Komponente des Geschwindigkeitsvektors des jeweiligen der Oberflächenpunkte ist,

- eine tatsächliche Steifigkeit und/oder eine tatsächliche Masse des Objekts aus der Umgebung des Robotermanipulators durch Vorwissen oder durch sensorisches Erfassen oder unter Annahme von unendlicher Steifigkeit und/oder unendlicher Masse zu erfassen,
- die erfasste tatsächliche Steifigkeit und/oder die tatsächliche Masse zu einer sicheren Normalgeschwindigkeit eines jeweiligen Datensatzes für den jeweiligen der Oberflächenpunkte zuzuordnen, und
- eine Geschwindigkeit für einen jeweiligen der Oberflächenpunkte auf einer aktuellen oder geplanten Bahn des Robotermanipulators so vorzugeben, dass die am jeweiligen der

Oberflächenpunkte auftretende Normalgeschwindigkeit kleiner oder gleich der zugeordneten sicheren Normalgeschwindigkeit ist.

Vorteile und bevorzugte Weiterbildungen des vorgeschlagenen Robotermanipulators ergeben sich durch eine analoge und sinngemäße Übertragung der im Zusammenhang mit dem vorgeschlagenen Verfahren vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1 ein Verfahren zum Vorgeben einer sicheren Geschwindigkeit eines Robotermanipulators gemäß einem Ausführungsbeispiel der Erfindung, und

Fig. 2 einen Robotermanipulator mit einer Steuereinheit um das Verfahren nach Fig. 1 auszuführen.

Die Darstellungen in den Figuren sind schematisch und nicht maßstäblich.

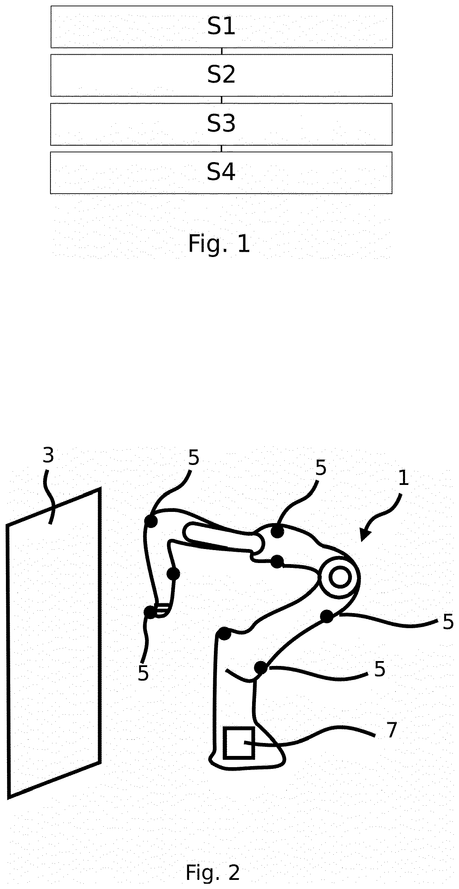

Fig. 1 zeigt ein Verfahren zum Vorgeben einer sicheren Geschwindigkeit eines Robotermanipulators 1, aufweisend die Schritte:

- Bereitstellen S1 einer Datenbank, wobei die Datenbank für eine Vielzahl von ausgewählten Oberflächenpunkten 5 am Robotermanipulator 1 einen jeweiligen Datensatz aufweist, wobei der jeweilige Datensatz für eine Vielzahl möglicher Steifigkeiten und/oder Massen eines Objekts 3 aus der Umgebung des Robotermanipulators 1 und für eine Vielzahl möglicher Posen und Massenverteilungen des Robotermanipulators 1 eine jeweilige sichere Normalgeschwindigkeit des jeweiligen der Oberflächenpunkte 5 angibt, wobei die Normalgeschwindigkeit die zur Oberfläche eines jeweiligen der Oberflächenpunkte 5 senkrecht stehende Komponente des Geschwindigkeitsvektors des jeweiligen der Oberflächenpunkte 5 ist und jeweils einem ersten Schadensmaß an einem jeweiligen Bauelement, an welchem der jeweilige der Oberflächenpunkte 5 angeordnet ist, und einem zweiten Schadensmaß an zumindest einem Gelenk des Robotermanipulators 1 zugeordnet ist, wobei das zweite Schadensmaß an dem zumindest einem Gelenk eine Belastung auf ein Getriebe umfasst, wobei das Getriebe mit einem Motor an dem jeweiligen Gelenk verbunden ist und zum Bewegen von zwei durch das jeweilige Gelenk verbundene Roboterglieder um das jeweilige Gelenk dient, wobei die Belastung auf das Getriebe eine Summe aus einem ersten Kennwert und einem zweiten Kennwert umfasst. Der erste Kennwert ist hierbei ein von der aktuellen Geschwindigkeit der Roboterglieder abhängiger Impuls auf das Getriebe und durch die Trägheit der Roboterglieder verursachter bei einer Kollision der Roboterglieder mit dem Objekt 3, und der zweite Kennwert auf dem durch die Rotation eines elektrischen Motors an einem jeweiligen Gelenk, an dem das jeweilige Getriebe angeordnet ist, basierender Drehimpuls, der bei der Kollision auf das Getriebe übertragen wird. Ferner werden die Schritte ausgeführt:

- Erfassen S2 einer tatsächlichen Steifigkeit und/oder einer tatsächlichen Masse des Objekts 3 aus der Umgebung des Robotermanipulators 1 durch Vorwissen oder durch sensorisches Erfassen oder unter Annahme von unendlich und einer aktuellen oder künftigen Pose und einer tatsächlichen Massenverteilung des Robotermanipulators 1,
- Zuordnen S3 der erfassten tatsächlichen Steifigkeit und/oder der tatsächlichen Masse und der aktuellen oder künftigen Pose und der tatsächlichen Massenverteilung des Robotermanipulators 1 zu einer sicheren Normalgeschwindigkeit eines jeweiligen Datensatzes für den jeweiligen der Oberflächenpunkte 5, und
- Vorgeben S4 einer Geschwindigkeit für einen jeweiligen der Oberflächenpunkte 5 auf einer aktuellen oder geplanten Bahn des Robotermanipulators 1, sodass die am jeweiligen der Oberflächenpunkte auftretende Normalgeschwindigkeit kleiner oder gleich der zugeordneten sicheren Normalgeschwindigkeit ist.

Fig. 2 zeigt einen Robotermanipulator 1 mit einer Steuereinheit 7, wobei die Steuereinheit 7 dazu ausgeführt ist:

- eine Datenbank bereitzustellen, wobei die Datenbank für eine Vielzahl von ausgewählten Oberflächenpunkten 5 am Robotermanipulator 1 einen jeweiligen Datensatz aufweist, wobei der jeweilige Datensatz für eine Vielzahl möglicher Steifigkeiten und/oder Massen eines Objekts 3 aus der Umgebung des Robotermanipulators 1 eine jeweilige sichere Normalgeschwindigkeit des jeweiligen der Oberflächenpunkte 5 angibt, wobei die Normalgeschwindigkeit die zur Oberfläche eines jeweiligen der Oberflächenpunkte 5 senkrecht stehende Komponente des Geschwindigkeitsvektors des jeweiligen der Oberflächenpunkte 5 ist,

- eine tatsächliche Steifigkeit und/oder eine tatsächliche Masse des Objekts 3 aus der Umgebung des Robotermanipulators 1 durch Vorwissen oder durch sensorisches Erfassen oder unter Annahme von unendlich zu erfassen,
- die erfasste tatsächliche Steifigkeit und/oder die tatsächliche Masse zu einer sicheren Normalgeschwindigkeit eines jeweiligen Datensatzes für den jeweiligen der Oberflächenpunkte 5 zuzuordnen, und
- eine Geschwindigkeit für einen jeweiligen der Oberflächenpunkte 5 auf einer aktuellen oder geplanten Bahn des Robotermanipulators 1 so vorzugeben, dass die am jeweiligen der Oberflächenpunkte auftretende Normalgeschwindigkeit kleiner oder gleich der zugeordneten sicheren Normalgeschwindigkeit ist.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert wird.

Bezugszeichenliste

1    Robotermanipulator
3    Objekt
5    Oberflächenpunkte
7    Steuereinheit

S1    Bereitstellen
S2    Erfassen
S3    Zuordnen
S4    Vorgeben

**Patentansprüche**

1.    Verfahren zum Vorgeben einer bezüglich einer möglichen Kollision des Robotermanipulators (1) sicheren Geschwindigkeit eines Robotermanipulators (1) , aufweisend die Schritte:

- Bereitstellen (S1) einer Datenbank, wobei die Datenbank für eine Vielzahl von ausgewählten Oberflächenpunkten (5) am Robotermanipulator (1) einen jeweiligen Datensatz aufweist, wobei der jeweilige Datensatz für eine Vielzahl möglicher

▪ Steifigkeiten und/oder Massen eines Objekts (3) aus der Umgebung des Robotermanipulators (1)
eine jeweilige sichere Normalgeschwindigkeit des jeweiligen der Oberflächenpunkte (5) angibt, wobei die Normalgeschwindigkeit die zur lokalen Oberfläche des Robotermanipulators (1) an einem jeweiligen der Oberflächenpunkte (5) senkrecht stehende Komponente des Geschwindigkeitsvektors des jeweiligen der Oberflächenpunkte (5) ist,

- Erfassen (S2) einer tatsächlichen Steifigkeit und/oder einer tatsächlichen Masse des Objekts (3) aus der Umgebung des Robotermanipulators (1) durch Vorwissen oder durch sensorisches Erfassen oder unter Annahme von unendlicher Steifigkeit und/oder unendlicher Masse,
- Zuordnen (S3) der erfassten tatsächlichen Steifigkeit und/oder der tatsächlichen Masse zu einer sicheren Normalgeschwindigkeit eines jeweiligen Datensatzes für den jeweiligen der Oberflächenpunkte (5), und
- Vorgeben (S4) einer Geschwindigkeit für einen jeweiligen der Oberflächenpunkte (5) auf einer aktuellen oder geplanten Bahn des Robotermanipulators (1), sodass die am jeweiligen der Oberflächenpunkte auftretende Normalgeschwindigkeit kleiner oder gleich der zugeordneten sicheren Normalgeschwindigkeit ist.

2.    Verfahren nach Anspruch 1,

wobei der jeweilige Datensatz weiterhin für eine Vielzahl möglicher
▪ Posen und Massenverteilungen des Robotermanipulators (1) eine jeweilige sichere Normalgeschwindigkeit des jeweiligen der Oberflächenpunkte (5) angibt, weiterhin aufweisend die Schritte:

- Erfassen einer aktuellen oder künftigen Pose und einer tatsächlichen Massenverteilung des Robotermanipulators (1),
- Zuordnen der aktuellen oder künftigen Pose und der tatsächlichen Massenverteilung des Robotermanipulators (1) zu einer sicheren Normalgeschwindigkeit eines jeweiligen Datensatzes für den jeweiligen der Oberflächenpunkte (5).

3.　Verfahren nach einem der vorhergehenden Ansprüche,

wobei der jeweilige Datensatz weiterhin für eine Vielzahl möglicher

■ Steifigkeiten und/oder Flächenträgheitsmomente des jeweiligen Bauelements, an welchem der jeweilige der Oberflächenpunkte (5) angeordnet ist,

eine jeweilige sichere Normalgeschwindigkeit des jeweiligen der Oberflächenpunkte (5) angibt, weiterhin aufweisend die Schritte:

- Erfassen einer tatsächlichen Steifigkeit und/oder eines tatsächlichen Flächenträgheitsmoments des jeweiligen Bauelements,
- Zuordnen der tatsächlichen Steifigkeit und/oder des tatsächlichen Flächenträgheitsmoments des jeweiligen Bauelements zu einer sicheren Normalgeschwindigkeit eines jeweiligen Datensatzes für den jeweiligen der Oberflächenpunkte (5).

4.　Verfahren nach einem der vorhergehenden Ansprüche,

wobei der jeweilige Datensatz weiterhin für eine Vielzahl möglicher

■ Verhältnisse der Oberflächenform der Oberfläche des jeweiligen Bauelements, an welchem der jeweilige der Oberflächenpunkte (5) angeordnet ist, zu einer geometrischen Form des Objekts (3)

eine jeweilige sichere Normalgeschwindigkeit des jeweiligen der Oberflächenpunkte (5) angibt, weiterhin aufweisend die Schritte:

- Erfassen des tatsächlichen Verhältnisses von der Oberflächenform der Oberfläche des jeweiligen Bauelements, an welchem der jeweilige der Oberflächenpunkte (5) angeordnet ist, und einer geometrischen Form des Objekts (3),

- Zuordnen des erfassten tatsächlichen Verhältnisses zu einer sicheren Normalgeschwindigkeit eines jeweiligen Datensatzes für den jeweiligen der Oberflächenpunkte (5).

5.　Verfahren nach Anspruch 4, wobei die Oberflächenform der Oberfläche des jeweiligen Bauelements und die geometrische Form des Objekts (3) jeweils in einer der folgenden Kategorien angegeben werden:

- konvex gewölbte Oberfläche mit Krümmungsradius r,
- konkav gewölbte Oberfläche mit Krümmungsradius r,
- keilförmig Oberfläche,
- Schärfegrad der Oberfläche.

6.　Verfahren nach einem der Ansprüche 3 bis 5, wobei die Steifigkeit des Bauelements, an welchem der jeweilige der Oberflächenpunkte (5) angeordnet ist, und die Steifigkeit am jeweiligen Ort der Oberflächenpunkte (5) des Robotermanipulators (1) jeweils zumindest eines der folgenden Elemente umfassen:

- E-Modul,
- Härtegrad,
- Streckgrenze,
- plastisches oder elastisches Verhalten,
- Duktilität.

7.　Verfahren nach einem der vorhergehenden Ansprüche, wobei die in der Datenbank angegebene jeweilige sichere Normalgeschwindigkeit jeweils einem ersten Schadensmaß an einem jeweiligen Bauelement, an welchem der jeweilige der Oberflächenpunkte (5) angeordnet ist, und/oder einem zweiten Schadensmaß an zumindest einem Gelenk des Robotermanipulators (1) zugeordnet ist.

8.　Verfahren nach Anspruch 7, wobei das zweite Schadensmaß an dem zumindest einem Gelenk eine Belastung auf ein Getriebe umfasst, wobei das Getriebe mit einem Motor an dem jeweiligen Gelenk verbunden ist und zum Bewegen von zwei durch das jeweilige Gelenk verbundene Roboterglieder um das jeweilige Gelenk dient.

9.　Verfahren nach Anspruch 8,

wobei die Belastung auf das Getriebe einen ersten Kennwert und/oder einen zweiten Kennwert oder eine Summe aus dem ersten Kennwert und dem zweiten Kennwert umfasst, wobei der erste Kennwert ein von der aktuellen Geschwindigkeit der Roboterglieder abhängiger Impuls auf das Getriebe und durch die Trägheit der Roboterglieder verursachter bei einer Kollision der Roboterglieder mit dem Objekt (3) ist, und wobei der zweite Kennwert auf dem durch die Rotation eines elektrischen Motors an einem jeweiligen Gelenk, an dem das jeweilige Getriebe angeordnet ist, basierender Drehimpuls ist, der bei der Kollision auf das Getriebe übertragen wird.

10. Robotermanipulator (1) mit einer Steuereinheit (7), wobei die Steuereinheit (7) dazu ausgeführt ist:

- eine Datenbank bereitzustellen, wobei die Datenbank für eine Vielzahl von ausgewählten Oberflächenpunkten (5) am Robotermanipulator (1) einen jeweiligen Datensatz aufweist, wobei der jeweilige Datensatz für eine Vielzahl möglicher Steifigkeiten und/oder Massen eines Objekts (3) aus der Umgebung des Robotermanipulators (1) eine jeweilige bezüglich einer möglichen Kollision des Robotermanipulators (1) sichere Normalgeschwindigkeit des jeweiligen der Oberflächenpunkte (5) angibt, wobei die Normalgeschwindigkeit die zur lokalen Oberfläche des Robotermanipulators (1) an einem jeweiligen der Oberflächenpunkte (5) senkrecht stehende Komponente des Geschwindigkeitsvektors des jeweiligen der Oberflächenpunkte (5) ist,
- eine tatsächliche Steifigkeit und/oder eine tatsächliche Masse des Objekts (3) aus der Umgebung des Robotermanipulators (1) durch Vorwissen oder durch sensorisches Erfassen oder unter Annahme von unendlicher Steifigkeit und/oder unendlicher Masse zu erfassen,
- die erfasste tatsächliche Steifigkeit und/oder die tatsächliche Masse zu einer sicheren Normalgeschwindigkeit eines jeweiligen Datensatzes für den jeweiligen der Oberflächenpunkte (5) zuzuordnen, und
- eine Geschwindigkeit für einen jeweiligen der Oberflächenpunkte (5) auf einer aktuellen oder geplanten Bahn des Robotermanipulators (1) so vorzugeben, dass die am jeweiligen der Oberflächenpunkte auftretende Normalgeschwindigkeit kleiner oder gleich der zugeordneten sicheren Normalgeschwindigkeit ist.

**Claims**

1. A method for predetermining a safe speed of a robot manipulator (1) with respect to a possible collision of the robot manipulator (1), having the steps of:

- providing (S1) a database, wherein the database has a respective data set for a plurality of selected surface points (5) on the robot manipulator (1), wherein the respective data set indicates a respective safe normal speed of the respective one of the surface points for a plurality of possible

stiffnesses and/or masses of an object (3) from the environment of the robot manipulator (1),
wherein the normal speed is the component of the speed vector of the respective one of the surface points (5) that is perpendicular to the local surface of the robot manipulator (1) at a respective one of the surface points (5),

- detecting (S2) an actual stiffness and/or an actual mass of the object (3) from the environment of the robot manipulator (1) by prior knowledge or by sensor detection or assuming infinite stiffness and/or infinite mass,
- assigning (S3) the detected actual stiffness and/or the actual mass to a safe normal speed of a respective data set for the respective one of the surface points (5), and
- predetermining (S4) a speed for a respective one of the surface points (5) on an actual or planned path of the robot manipulator (1) such that the normal speed occurring at the respective one of the surface points is less than or equal to the assigned safe normal speed.

2. The method according to claim 1,

wherein the respective data set further indicates a respective safe normal speed of the respective one of the surface points (5) for a plurality of possible
poses and mass distributions of the robot manipulator (1), further having the steps of:

- detecting a current or future pose and an actual mass distribution of the robot manipulator (1),
- assigning the current or future pose and the actual mass distribution of the robot manipulator (1) to a safe normal speed of a respective data set for the respective one of the surface points (5).

3. The method according to either of the preceding claims,

wherein the respective data set further indicates a respective safe normal speed of the respective one of the surface points (5) for a plurality of possible
stiffnesses and/or area moments of inertia of the

17    **EP 3 946 831 B1**    18

respective structural element on which the respective one of the surface points (5) is arranged,
further having the steps of:

- detecting an actual stiffness and/or an actual area moment of inertia of the respective component,
- assigning the actual stiffness and/or the actual surface moment of inertia of the respective component to a safe normal speed of a respective data set for the respective one of the surface points (5).

4. The method according to any of the preceding claims,

wherein the respective data set further indicates a respective safe normal speed of the respective one of the surface points (5) for a plurality of possible
ratios of the surface shape of the surface of the respective component on which the respective one of the surface points (5) is arranged to a geometric shape of the object (3),
further having the steps of:

- detecting the actual ratio of the surface shape of the surface of the respective component on which the respective one of the surface points (5) is arranged and a geometric shape of the object (3),
- assigning the detected actual ratio to a safe normal speed of a respective data set for the respective one of the surface points (5).

5. The method according to claim 4,
wherein the surface shape of the surface of the respective component and the geometric shape of the object (3) are each specified in one of the following categories:

- convex curved surface having a radius of curvature r,
- concave curved surface having a radius of curvature r,
- wedge-shaped surface,
- degree of sharpness of the surface.

6. The method according to any of claims 3 to 5,
wherein the stiffness of the component on which the respective one of the surface points (5) is arranged and the stiffness at the respective location of the surface points (5) of the robot manipulator (1) each comprise at least one of the following elements:

- e-modulus,

- degree of hardness,
- yield strength,
- plastic or elastic behavior,
- ductility.

7. The method according to any of the preceding claims,
wherein the respective safe normal speed specified in the database is assigned in each case to a first measure of damage to a respective component on which the respective one of the surface points (5) is arranged and/or to a second measure of damage to at least one joint of the robot manipulator (1).

8. The method according to claim 7,
wherein the second measure of damage to the at least one joint comprises a load on a gear mechanism, wherein the gear mechanism is connected to a motor at the respective joint and is used for moving two robot members which are connected by the respective joint about the respective joint.

9. The method according to claim 8,

wherein the load on the gear mechanism comprises a first characteristic value and/or a second characteristic value or a sum of the first characteristic value and the second characteristic value,
wherein the first characteristic value is a pulse on the gear mechanism which depends on the current speed of the robot members and is caused by the inertia of the robot members when the robot members collide with the object (3), and
wherein the second characteristic value is the rotary pulse which is based on the rotation of an electric motor at a respective joint at which the respective gear mechanism is arranged and which is transmitted to the gear mechanism during the collision.

10. A robot manipulator (1) having a control unit (7), wherein the control unit (7) is designed for the following:

- to provide a database, wherein the database has a respective data set for a plurality of selected surface points (5) on the robot manipulator (1), wherein the respective data set for a plurality of possible stiffnesses and/or masses of an object (3) from the environment of the robot manipulator (1) indicates a respective normal speed of the respective one of the surface points (5) which is safe with respect to a possible collision of the robot manipulator (1), wherein the normal speed is the component of the speed vector of the respective one of the surface points (5) that is perpendicular to the local surface of the robot manipulator (1) at a respective one of the surface points (5),
- to detect an actual stiffness and/or an actual mass of the object (3) from the environment of the robot manipulator (1) by prior knowledge or by sensory system detection or by assuming infinite stiffness and/or infinite mass,
- to assign the detected actual stiffness and/or the actual mass to a safe normal speed of a respective data set for the respective one of the surface points (5), and
- to predetermine a speed for a respective one of the surface points (5) on an actual or planned path of the robot manipulator (1) such that the normal speed occurring at the respective one of the surface points is less than or equal to the assigned safe normal speed.

**Revendications**

1. Procédé permettant de définir une vitesse de sécurité d'un robot manipulateur (1) par rapport à une collision possible du robot manipulateur (1), présentant les étapes consistant à :

   - fournir (S1) une base de données, dans lequel la base de données présente un ensemble de données respectif pour une pluralité de points de surface (5) sélectionnés sur le robot manipulateur (1), dans lequel l'ensemble de données respectif indique, pour une pluralité de rigidités et/ou de masses possibles d'un objet (3) provenant de l'environnement du robot manipulateur (1),
   une vitesse normale de sécurité respective du point de surface respectif parmi les points de surface (5), dans lequel la vitesse normale est la composante du vecteur de vitesse du point de surface respectif parmi les points de surface (5), laquelle composante est perpendiculaire à la surface locale du robot manipulateur (1) en un point de surface respectif parmi les points de surface (5),
   - détecter (S2) une rigidité réelle et/ou une masse réelle de l'objet (3) provenant de l'environnement du robot manipulateur (1) par connaissance préalable ou par détection sensorielle ou en supposant une rigidité infinie et/ou une masse infinie,
   - associer (S3) la rigidité réelle et/ou la masse réelle détectées à une vitesse normale de sécurité d'un ensemble de données respectif pour le point de surface respectif parmi les points de surface (5), et
   - définir (S4) une vitesse pour un point de surface respectif parmi les points de surface (5) sur une trajectoire actuelle ou planifiée du robot manipulateur (1), de sorte que la vitesse normale survenant au point de surface respectif parmi les points de surface est inférieure ou égale à la vitesse normale de sécurité associée.

2. Procédé selon la revendication 1,

   dans lequel l'ensemble de données respectif indique en outre, pour une pluralité de poses et de distributions de masse possibles du robot manipulateur (1), une vitesse normale de sécurité respective du point de surface respectif parmi les points de surface (5), présentant en outre les étapes consistant à :

   - détecter une pose actuelle ou future et une distribution de masse réelle du robot manipulateur (1),
   - associer la pose actuelle ou future et la distribution de masse réelle du robot manipulateur (1) à une vitesse normale de sécurité d'un ensemble de données respectif pour le point de surface respectif parmi les points de surface (5).

3. Procédé selon l'une des revendications précédentes,

   dans lequel l'ensemble de données respectif indique en outre, pour une pluralité de rigidités et/ou de moments d'inertie de surface possibles de l'élément structural respectif, sur lequel est disposé le point de surface respectif parmi les points de surface (5),
   une vitesse normale de sécurité respective du point de surface respectif parmi les points de surface (5), présentant en outre les étapes consistant à :

   - détecter une rigidité réelle et/ou un moment d'inertie de surface réel de l'élément structural respectif,
   - associer la rigidité réelle et/ou le moment d'inertie de surface réel de l'élément structural respectif à une vitesse normale de sécurité d'un ensemble de données respectif pour le point de surface respectif parmi les points de surface (5).

4. Procédé selon l'une des revendications précédentes,

   dans lequel l'ensemble de données respectif indique en outre, pour une pluralité de rapports possibles entre la forme de surface de la surface de l'élément structural respectif, sur lequel est disposé le point de surface respectif parmi les points de surface (5), et une forme géométrique de l'objet (3),
une vitesse normale de sécurité respective du point de surface respectif parmi les points de surface (5), présentant en outre les étapes consistant à :

- détecter le rapport réel entre la forme de surface de la surface de l'élément structural respectif, sur lequel est disposé le point de surface respectif parmi les points de surface (5), et une forme géométrique de l'objet (3),
- associer le rapport réel détecté à une vitesse normale de sécurité d'un ensemble de données respectif pour le point de surface respectif parmi les points de surface (5).

**5.** Procédé selon la revendication 4,
dans lequel la forme de surface de la surface de l'élément structural respectif et la forme géométrique de l'objet (3) sont respectivement indiquées dans l'une des catégories suivantes :

- surface bombée convexe comportant un rayon de courbure r,
- surface bombée concave comportant un rayon de courbure r,
- surface en forme de coin,
- degré de netteté de la surface.

**6.** Procédé selon l'une des revendications 3 à 5,
dans lequel la rigidité de l'élément structural, sur lequel est disposé le point de surface respectif parmi les points de surface (5), et la rigidité à l'emplacement respectif des points de surface (5) du robot manipulateur (1) comprennent respectivement au moins l'un des éléments suivants :

- module d'élasticité,
- degré de dureté,
- limite d'étirage,
- comportement plastique ou élastique,
- ductilité.

**7.** Procédé selon l'une des revendications précédentes,
dans lequel la vitesse normale de sécurité respective indiquée dans la base de données est associée à respectivement une première mesure de dommage au niveau d'un élément structural respectif, sur lequel est disposé le point de surface respectif parmi les points de surface (5), et/ou à une seconde mesure de dommage au niveau d'au moins une articulation du robot manipulateur (1).

**8.** Procédé selon la revendication 7,
dans lequel la seconde mesure de dommage au niveau de l'au moins une articulation comprend une charge sur une transmission, dans lequel la transmission est reliée à un moteur au niveau de l'articulation respective et sert à déplacer deux membres de robot reliés par l'articulation respective autour de l'articulation respective.

**9.** Procédé selon la revendication 8,
dans lequel la charge sur la transmission comprend une première valeur caractéristique et/ou une seconde valeur caractéristique ou une somme de la première valeur caractéristique et de la seconde valeur caractéristique,
dans lequel la première valeur caractéristique est une impulsion sur la transmission, laquelle impulsion dépend de la vitesse actuelle des membres de robot et est causée par l'inertie des membres de robot lors d'une collision des membres de robot avec l'objet (3), et
dans lequel la seconde valeur caractéristique est une impulsion de rotation basée sur la rotation d'un moteur électrique au niveau d'une articulation respective, sur laquelle est disposée la transmission respective, laquelle impulsion de rotation est transmise à la transmission lors de la collision.

**10.** Robot manipulateur (1) comportant une unité de commande (7), dans lequel l'unité de commande (7) est configurée pour :

- fournir une base de données, dans lequel la base de données présente un ensemble de données respectif pour une pluralité de points de surface (5) sélectionnés sur le robot manipulateur (1), dans lequel l'ensemble de données respectif indique, pour une pluralité de rigidités et/ou de masses possibles d'un objet (3) provenant de l'environnement du robot manipulateur (1), une vitesse normale de sécurité respective, par rapport à une collision possible du robot manipulateur (1), du point de surface respectif parmi les points de surface (5), dans lequel la vitesse normale est la composante du vecteur de vitesse du point de surface respectif parmi les points de surface (5), laquelle composante est perpendiculaire à la surface locale du robot manipulateur (1) en un point de surface respectif parmi les points de surface (5),
- détecter une rigidité réelle et/ou une masse réelle de l'objet (3) provenant de l'environnement du robot manipulateur (1) par connaissance préalable ou par détection sensorielle ou en supposant une rigidité infinie et/ou une masse infinie,
- associer la rigidité réelle et/ou la masse réelle détectées à une vitesse normale de sécurité d'un ensemble de données respectif pour le point de surface respectif parmi les points de surface (5), et

- définir une vitesse pour un point de surface respectif parmi les points de surface (5) sur une trajectoire actuelle ou planifiée du robot manipulateur (1), de sorte que la vitesse normale survenant au point de surface respectif parmi les points de surface est inférieure ou égale à la vitesse normale de sécurité associée.

| S1 |
|----|

| S2 |
|----|

| S3 |
|----|

| S4 |
|----|

Fig. 1

Fig. 2

**EP 3 946 831 B1**

**In der Beschreibung aufgeführte Patentdokumente**

- EP 2977149 A2
- JP 2018103343 A